# EUROPÄISCHE PATENTSCHRIFT

(11) **EP 1 537 302 B1**
(45) Veröffentlichungstag und Bekanntmachung des Hinweises auf die Patenterteilung: **18.01.2006**
(21) Anmeldenummer: 03709620.3
(22) Anmeldetag: 18.02.2003
(51) Int. Cl.: F01N 3/029, F01N 3/08, F16K 11/074, F16K 3/08

(54) **VORRICHTUNG ZUM AUFTEILEN VON GASSTRÖMEN**
DEVICE FOR DIVIDING GAS FLOWS
DISPOSITIF POUR DIVISER UN FLUX GAZEUX

(30) Priorität: 30.08.2002 DE 10240131
(43) Veröffentlichungstag der Anmeldung: 08.06.2005
(73) Patentinhaber: ROBERT BOSCH GMBH, 70442 Stuttgart (DE)
(72) Erfinder: BAREIS, Marc, 71706 Markgroeningen (DE)
(86) Internationale Anmeldenummer: PCT/DE2003/000484
(87) Internationale Veröffentlichungsnummer: WO 2004/022933

(56) Entgegenhaltungen:
- EP-A- 0 469 593
- EP-A- 0 562 805
- WO-A-02/075124
- DE-U- 29 518 185
- US-A- 6 105 365

## Beschreibung

### Technisches Gebiet

Die Anforderungen an heutige Verbrennungskraftmaschinen, seien es fremdgezündete, gemischverdichtende oder luftverdichtende Verbremnungskrafhnaschinen, hinsichtlich der Abgasemissionen steigen ständig. Hinsichtlich der für das Jahr 2005 zu erwartenden Euro IV-Norm wird bei luftverdichtenden Verbrennungskraftmaschinen der Einsatz von Partikelfiltern diskutiert. Diese sollen die vom Dieselmotor emittierten Partikel aus dem Abgasstrom entfernen. CO und HC lassen sich mit Oxidationskatalysatoren zum Großteil verbrennen. Schwierig gestaltet sich die Reduktion von NOₓ, welches zudem auch bei fremdgezündeten Benzin-Direkteinspritz-Ottomotoren entsteht.

### Stand der Technik

Bei luftverdichtenden Verbrennungskraftmaschinen werden die Schadstoffe CO und HC mit einem der Verbrennungskraftmaschine nachgeschalteten Oxidationskatalysator zum größten Teil verbrannt. Am Schwierigsten gestaltet sich die Reduktion von NOₓ. Erst durch das Zusetzen eines Reduktionsmittels zum Abgasstrom kann in einem nachgeschalteten Katalysator die NOₓ-Senkung erzielt werden. Das Nachschalten eines Oxidationskatalysators bewirkt bei einem Dieselmotor eine deutliche Senkung der Kohlenmonoxid- und Kohlenwasserstoffemissionen. Da die Kohlenwasserstoffemission zur Partikelemission beiträgt, kann auch diese in begrenztem Maße durch den Katalysator reduziert werden. Die Verwendung von schwefelarmem Kraftstoff (≤ 0,001%; ≤ 10 ppm S ab dem Jahre 2005) gewährleistet eine dauerhafte Wirksamkeit des Katalysators.

Zur Zeit werden mittels des SCR-Verfahrens (Selektive katalytische Reduktion) die höchsten NOₓ-Konvertierungsraten erzielt. Dabei wird ein Reduktionsmittel über ein Dosiersystem kennfeldabhängig in einen mehrteilig ausgebildeten Katalysator eingedüst. Das derzeit gebräuchlichste Reduktionsmittel ist eine Harnstoff-Wasserlösung. Im Hydrolyseteil wird daraus das eigentliche Reduktionsmittel NH₃ (Ammoniak) gebildet. Im SCR-Teil erfolgt dann die Reduktion von NOₓ. Komplettiert wird das Katalysatorsystem in der Regel durch einen Oxidationsteil, der die unverbrannten Schadstoffe CO und HC oxidiert. Anstelle von einer Harnstoff-Wasserlösung als Reduktionsmittel kann auch Dieselkraftstoff als Reduktionsmittel eingesetzt werden.

Gemäß einer anderen Ausführungsvariante eines Reduktionssystems (CRT-System) werden zuerst in einem Oxidationskatalysator die Schadstoffe CO, HC und NOₓ oxidiert, wobei ein sich kontinuierlich regenerierendes Partikelfiltersystem eingesetzt wird. Das durch die Oxidation gebildete NO₂ verbindet sich anschließend in einem nachgeschalteten Rußfilter mit dem Kohlenstoff C der dort abgeschiedenen Partikel und verbrennt diesen dort kontinuierlich zu CO₂. Das NO₂ wird wieder zu NO reduziert. Eine eventuell gewünschte komplette NOₓ-Reduktion müßte anschließend auf Basis des SCR-Verfahrens - wie oben bereits dargelegt - durchgeführt werden. Dieses System vermeidet Temperaturspitzen im Rußfilter und erhöht somit dessen Lebensdauer. Zur Sicherstellung einer optimalen und dauerhaft wirksamen Reduktion ist der Motorbetrieb mit schwefelfreiem Dieselkraftstoff (≤ 0,001% S), auch City-Diesel genannt, erforderlich.

Bei heute in der Entwicklung befindlichen Otto-Motoren, die gemäß des Prinzipes der Benzindirekteinspritzung arbeiten, entstehen bei der Verbrennung NOₓ-Anteile, die im sehr mageren Abgas nicht durch einen Dreiwege-Katalysator reduziert werden können. Durch Abgasrückführung mit höherer Abgasrückführrate wird eine Reduzierung des NOₓ₋Anteiles im Abgas um etwa 70% erreicht. Zur Erfüllung der Abgasvorschriften ist zusätzlich eine Nachbehandlung der NOₓ-Emission unumgänglich. Für eine Reduzierung dieses Abgasanteils bietet der NOₓ-Speicherkatalysator das größte Potential. Als motorische Maßnahme zur Beeinflussung der Abgaszusammensetzung hat sich hinsichtlich der NOₓ₋Emission als sehr wirkungsvoll erwiesen, durch das dem Brennraum nochmals zugeführte Abgas die Absenkung der Verbrennungsspitzentemperatur herbeizuführen. Da die NOₓ₋Bildung überproportional mit der Verbrennungstemperatur steigt, stellt die Abgasrückführung als temperatursenkende Maßnahme eine sehr wirkungsvolle Methode zur NOₓ₋Senkung dar. Durch eine weitergehende Optimierung der Abgasrückführraten kann auch eine Reduzierung des Kraftstoffverbrauches erzielt werden. Die Abgasrückführung kann erreicht werden über eine innere Abgasrückführung durch entsprechende Ventilüberschneidungen der Ein- bzw. Auslaßventile der Verbrennungskraftmaschine oder durch eine äußere Abgasrückführung durch entsprechend gesteuerte Abgasrückführventile.

Eine Vorrichtung gemäß dem Oberbegriff des Anspruchs 1 ist aus US 6,105,365 A bekannt.

### Darstellung der Erfindung

Mit der erfindungsgemäß vorgeschlagenen Lösung läßt sich ein an einer Verzweigungsstelle eintretender ungeteilter Vollstrom eines Gases in einem bestimmten Volumenstromverhältnis in zwei Gasteilströme aufteilen. Gleichzeitig wird ein zuzudosierender Strom eines weiteren Mediums, zum Beispiel zur Abgasnachbehandlung von Abgasen einer luftverdichtenden Verbrennungskraftmaschine oder einer gemischverdichtenden, fremdgezündeten Verbrennungskraftmaschine, in einem bestimmten Verhältnis den beiden an der Verzweigungsstelle geteilten Teilströme zugeführt.

Die Dosiervorrichtung zur Zudosierung eines Zusatzmittels, insbesondere eines Reduktionsmittels, ist in Strömungsrichtung eines vollen, ungeteilten Gasstroms gesehen, hinter einer Vorrichtung zur Aufteilung des Gasstroms in Teilströme angeordnet. Auf der als Hohlwelle ausgebildeten Zudosier-Vorrichtung ist eine Steuerscheibe aufgenommen, die mit einer im Strömungsquerschnitt des Gasstroms angeordneten Segmentscheibe zusammenwirkt. In Strömungsrichtung des Gasstroms gesehen ist innerhalb eines Zuleitungsabschnittes, der einen Diffusorabschnitt enthalten kann, ein beispielsweise als Trennwand ausbildbares Trennelement vorgesehen, welches den Strömungsquerschnitt im Zuleitungs- bzw. Diffusorabschnitt in einen ersten Strömungsquerschnitt und einen zweiten Strömungsquerschnitt unterteilt, die jeweils halbkreisförmigen Querschnitt aufweisen. Die Segmentscheibe und die zu dieser relativ bewegbare Steuerscheibe umfassen gleichmäßig auf den beiden Flächen ausgebildete Öffnungen. Die gleichmäßig über die Scheibenflächen von Segmentscheibe und Steuerfläche verteilt angebrachten Öffnungen erlauben eine gleichmäßige Anströmung eines hinter der Vorrichtung zur Aufteilung von Gasströmen liegenden Abgas-Katalysators. Eine An-drosselung bzw. eine ungedrosselte Freigabe des ersten bzw. des zweiten Strömungsbereiches innerhalb des Rohrleitungsabschnittes läßt sich durch eine Relativbewegung der Steuerscheibe zur Segmentscheibe erreichen. Das Umschalten der Volumenstromverhältnisse bzw. die Androsselung und die Freigabe des ersten oder des zweiten Strömungsquerschnittes kann mit einer kleinen Winkelbewegung der Steuerscheibe vollzogen werden. Dies bietet den Vorteil, daß sich die Umschaltzeiten zwischen Androsselung bzw. Freigabe des ersten und des zweiten Strömungsbereiches erheblich verkürzen.

Die Segment- und die Steuerscheibe werden vorzugsweise als Blechteile ausgelegt. Sowohl Segment- als auch Steuerscheibe können durch Blechsicken oder Radialrippen oder Abkantungen versteift werden, um den in einem Strömungsquerschnitt eines Gasstromes auftretenden Biegebeanspruchungen standzuhalten. Die stationär innerhalb des Strömungsquerschnittes angeordnete Segmentscheibe kann darüber hinaus über eine Verrippung versteift werden.

Zur Erzielung der Relativbewegung und einer leichtgängigen Verstellbarkeit der Steuerscheibe relativ zur Segmentscheibe befindet sich zwischen Segment- und Steuerscheibe ein Luftspalt. Die Größe des Luftspaltes ist abhängig von der Ausbildung eines Kegelbereiches an der als Zudosier-Vorrichtung eingesetzten Hohlwelle. Der Kegelbereich ist in axiale Richtung mittels einer Feder zwischen Steuerscheibe und Segmentscheibe in seiner Position gehalten. Dies dient einerseits dem Ausgleich von Fertigungstoleranzen und andererseits zur Herabsetzung der Reibung zwischen den relativ zueinander bewegbaren Komponenten.

Die in Strömungsrichtung gesehen hinter Segmentscheibe und Steuerscheibe angeordnete Zudosier-Vorrichtung umfaßt eine Hohlwelle, die ihrerseits von einer Hülse umschlossen wird. Die Hohlwelle ist relativ zu einer stationär angeordneten Hülse verdrehbar. Vorzugsweise ist die Steuerscheibe am Kegelbereich, der seinerseits an der Hohlwelle ausgebildet ist, befestigt. Bei einem Verdrehen der Hohlwelle, was mittels einer Kupplung bzw eines Schrittmotors erfolgen kann, erfolgt eine Verdrehung einer Dosieröffnung, die in der Wandung der Hohlwelle ausgebildet ist Die Dosieröffnung in der Wandung der Hohlwelle kann je nach Verdrehung der Hohlwelle um ihre Symmetrieachse mit in der Wandung der die Hohlwelle umschließenden, stationär angeordneten Hülse vorgesehenen Austrittsöffnungen in Überdeckung gebracht werden. Die Hülse, welche die verdrehbare Hohlwelle umgibt, wird im Strömungsquerschnitt durch das Trennelement in ihrer Position gehalten. Je nach Verdrehung der Hohlwelle relativ zur Hülse erfolgt eine Einbringung des Zusatzmittels, entweder in den ersten oder den zweiten Strömungsbereich, stromab der Steuerscheibe bzw. der stationär im Strömungsquerschnitt angeordneter Segmentscheibe.

Gemäß einer Ausführungsvariante der erfindungsgemäß vorgeschlagenen Lösung sind sowohl auf der Steuerscheibe als auch auf der Segmentscheibe Öffnungen in unterschiedlichen Geometrien aufgebracht. Die Öffnungen können als Radialspalte ausgebildet werden, von denen jeweils ein Radialspalt größerer Breite und ein Radialspalt geringerer Breite in Umfangsrichtung regelmäßig verteilt über den Umfang der Segmentscheibe und der Steuerscheibe angeordnet werden können. Alternativ können die die Durchströmung von Segmentscheibe und Steuerscheibe ermöglichenden Öffnungen auch als auf konzentrischen Kreisen liegend angeordnete Umfangsschlitze bzw. trapezförmige Öffnungen beschaffen sein. Die Form der Ausbrüche an der Steuerscheibe korrespondiert jeweils zu der Form der Ausbrüche an den Segmentscheiben.

In einer weiteren Ausführungsvariante läßt sich die Steuerscheibe durch Axialversatz der Segmentscheibe bewegen, was die Einstellung eines sehr kleinen, etwa 10%igen Teilgasstroms ermöglicht. Gemäß dieser Ausführungsvariante können in der Segmentscheibe die Umfangsschlitze bzw. die engen Radialspalten in der Scheibenfläche der Segmentscheibe entfallen.

### Zeichnung

Anhand der Zeichnung wird die Erfindung nachfolgend eingehender beschrieben.

Es zeigt:
- Figur 1: eine Draufsicht auf die erfindungsgemäß vorgeschlagene Vorrichtung zur Aufteilung eines Gasstroms,
- Figur 2: eine Ansicht einer geöffneten Flanschverbindung gemäß einem Schnittverlauf durch die Vorrichtung in Figur 1,
- Figur 3: eine Schnittdarstellung durch die Vorrichtung gemäß Figur 2 mit Segment- und Steuerscheibe,
- Figur 4: Segment- und Steuerscheibe in einer ersten Ausführungsform in einer ersten Schaltstellung,
- Figur 5: Segment- und Steuerscheibe in der ersten Ausführungsvariante in einer zweiten Schaltstellung,
- Figur 6: Segment- und Steuerscheibe in einer zweiten Ausführungsform in einer ersten Schaltstellung,
- Figur 7: Segment- und Steuerscheibe in einer zweiten Ausführungsform in einer zweiten Schaltstellung,
- Figur 8: Segment- und Steuerscheibe gemäß der ersten Ausführungsform in der zweiten Schaltstellung und ein sich in dieser Schaltstellung einstellendes Aufteilungsverhältnis des Gasstromes auf Teilströme,
- Figur 9: Segment- und Steuerscheibe gemäß der zweiten Ausführungsform in der ersten Schaltstellung und sich in dieser Schaltstellung einstellende Teilströme und
- Figur 10: Segment- und Steuerscheibe gemäß der zweiten Ausführungsform in der zweiten Schaltstellung und ein sich in dieser Schaltstellung einstellendes Verhältnis der Teilströme.

### Ausführungsvarianten

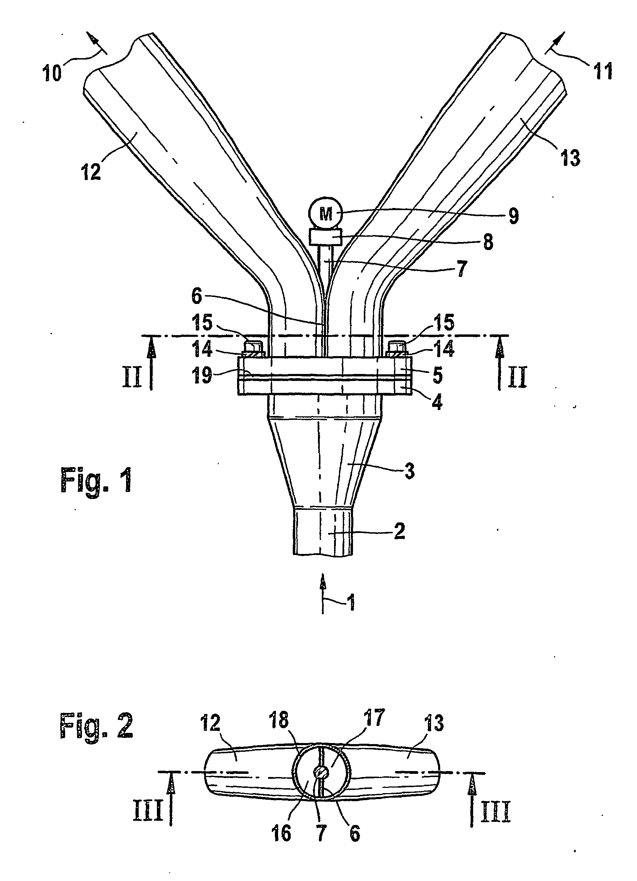

Figur 1 zeigt eine Draufsicht auf die erfindungsgemäß vorgeschlagene Vorrichtung zur Aufteilung eines Gasstroms.

Ein ungeteilter Gasstrom 1 strömt innerhalb eines Zuleitungsabschnittes 2. Der Zuleitungsabschnitt 2 geht in einen Diffusorabschnitt 3 über, an welchem ein erster Flansch 4 ausgebildet ist. Der erste Flansch 4 wird mit einem zweiten Flansch 5 verbunden, an welchem ein erster Abströmkanal 12 und ein zweiter Abströmkanal 13 münden. Die Abströmkanäle 12 bzw. 13 sind durch ein senkrecht zum Strömungsquerschnitt angeordnetes, stationäres Trennelement 6 getrennt. Der erste Flansch 4 und der zweite Flansch 5 werden über mehrere Flanschschrauben 15, denen jeweils ein Federring 14 zugeordnet ist, miteinander verbunden. Zwischen dem ersten Abströmkanal 12 für einen Teilstrom 1, 10 bzw. den zweiten Abströmkanal 13 für einen Teilstrom 2 (Bezugszeichen 11) ist eine Dosiervorrichtung zur Eindosierung eines Zusatzmittels vorgesehen. Die Dosiervorrichtung umfaßt eine Hohlwelle 7, die über eine Kupplung 8 an einen Schrittmotor 9 angekuppelt ist. Über den Schrittmotor 9 kann die als Zudosier-Vorrichtung dienende Hohlwelle 7 relativ zu einer in Figur 1 nicht dargestellten Hülse, die am Trennelement 6 aufgenommen ist, verstellt werden.

Figur 2 zeigt eine Ansicht einer Flanschverbindung gemäß dem Schnittverlauf II - II in Figur 1.

Aus der Darstellung gemäß Figur 2 geht hervor, daß das Trennelement 6 einen ersten Strömungsbereich 16 und einen zweiten Strömungsbereich 17. voneinander trennt. Die Strömungsbereiche werden durch eine Kanalwandung 18 nach außen begrenzt. Der erste Strömungsbereich 16 geht in den ersten Abströmkanal 12 über, während der zweite Strömungsbereich 17 in den zweiten Abströmkanal 13 übergeht. Das beispielsweise als Trennwand ausgebildete Trennelement 6 ist in vertikaler Einbaulage eingebaut und nimmt eine in Figur 2 nicht dargestellte Hülse auf, in welcher die Hohlwelle 7, vgl. Figur 1, die durch den Schrittmotor 9 und die Kupplung 8 angetrieben wird, umschließt.

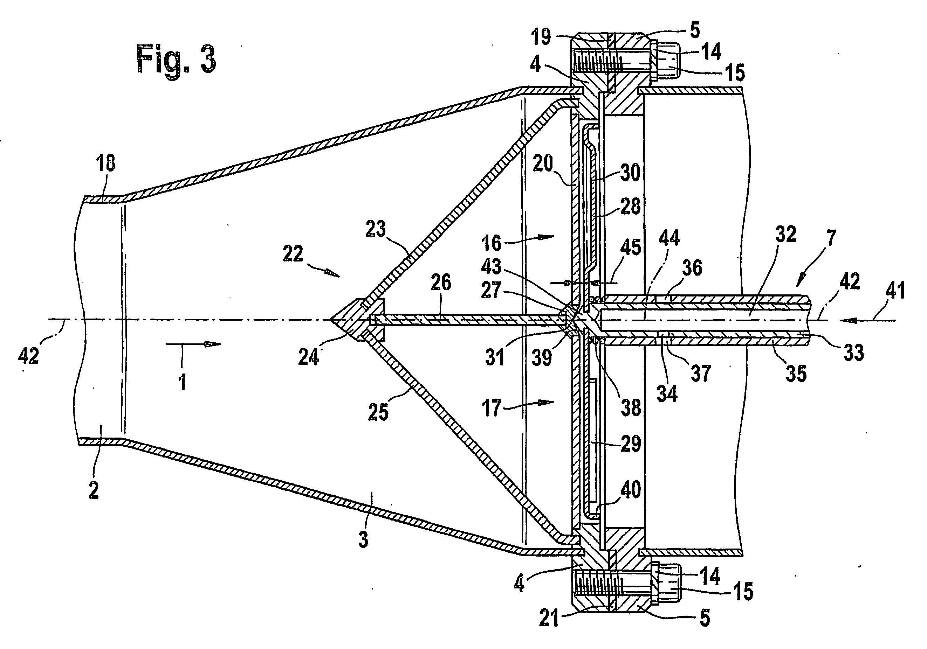

Figur 3 zeigt die Vorrichtung gemäß Figur 1 gemäß dem in Figur 2 dargestellten Schnittverlauf III-III mit einer Segmentscheibe und einer dieser - in Strömungsrichtung gesehen - nachgeordneten Steuerscheibe.

Der ungeteilte Gasstrom 1 passiert den Zuleitungsabschnitt 2 und tritt von diesem in einen Diffusorabschnitt 3 ein. Der Zuleitungsabschnitt 2 und der Diffusorabschnitt 3 sind von einer Kanalwandung 18 begrenzt. In Strömungsrichtung des ungeteilten Gasstroms 1 gesehen wird der Diffusorabschnitt 3 durch eine stationär aufgenommene Segmentscheibe 20 begrenzt. Die Segmentscheibe 20 ist mit ihrer Umfangsfläche im ersten Flansch 4 gelagert. Der erste Flansch 4 und der zweite Flansch 5 werden über mehrere, am Umfang der Flansche 4, 5 verteilt angeordnete Flanschschrauben 15 miteinander verbunden, wobei jeder Flanschschraube 15 ein Federring 14 zugeordnet sein kann. An der Stoßfuge zwischen dem ersten Flansch 4 und dem zweiten Flansch 5 ist ein Dichtring 19, 21 vorgesehen, um die Flanschverbindung zwischen dem ersten Flansch 4 und dem zweiten Flansch 5 nach außen abzudichten. Am ersten Flansch 4 ist die Segmentscheibe 20 befestigt. Die Segmentscheibe 20 weist darüber hinaus einen Stützstab 26 auf, der koaxial zur Symmetrieachse 42 des Diffusorabschnittes 3 verläuft. An dem Stützstab 26 ist eine Abstützung 24 aufgenommen. Diese dient der Aufnahme des Fußes eines ersten Stabes 23 und des Fußes eines zweiten Stabes 25, die wiederum an der dem Diffusorabschnitt 3 zugewandten Seite des ersten Flansches 4 aufgenommen sind. Durch diese Versteifung 22 wird die Lagerung der Segmentscheibe 20 im ersten Flansch 4 stabilisiert. Vorzugsweise liegt die Befestigung des Stützstabes 26 an der Segmentscheibe 20 innerhalb eines Druckstückes 27, welches auf der dem Diffusorabschnitt 3 abgewandten Seite eine Punktauflage 31 zur Aufnahme einer Kegelspitze der Hohlwelle 7, 32 aufweist, die in der Darstellung gemäß Figur 3 als Zudosier-Vorrichtung für ein Zusatzmedium, wie beispielsweise verdampften Kraftstoff 41, dient.

Die Segmentscheibe 20, die am ersten Flansch 4 befestigt ist, wird bevorzugt als ein Blechteil ausgebildet und erstreckt sich im wesentlichen senkrecht - mit Ausnahme des an dieser ausgebildeten Druckstücks 27 - durch den Strömungsquerschnitt, der durch ein der Darstellung gemäß Figur 3 nicht dargestelltes Trennelement 6 in einen ersten Strömungsbereich 16 und einen zweiten Strömungsbereich 17 unterteilt ist. In einem geringen axialen Abstand - in Strömungsrichtung des ungeteilten Gasstroms 1 gesehen - ist hinter der Segmentscheibe 20 eine an der Hohlwelle 7, 32 aufgenommene Steuerscheibe 28 angeordnet. Zwischen der Segmentscheibe 20 und der Steuerscheibe 28 befindet sich ein Spalt 45. Die Steuerscheibe 28 kann beispielsweise als ein tiefgezogenes Blechteil ausgeführt werden, welches an einer Steuerscheibenaufnahme 39 (Punktauflage 31) der Segmentscheibe 20 aufgenommen ist. Die Steuerscheibe 28 wird durch ein Federelement 38, welches sich einerseits an der Innenseite der Steuerscheibe 28 und andererseits an einer der Steuerscheibenaufnahme 39 zuweisenden Stirnseite einer Hülse 35 abstützt, gegen die Segmentscheibe 20 vorgespannt. Zur radialen Versteifung kann die Segmentscheibe 20 entweder Sicken 30 enthalten oder Radialrippen 29 aufweisen, die eine Versteifung der relativ zur Segmentscheibe 20 bewegbaren Steuerscheibe 28 bewirken, die bei der Durchströmung des Zuleitungsabschnittes 2 bzw. des Diffusorabschnittes 3 einer Biegebeanspruchung ausgesetzt ist. Die Steuerscheibe 28 kann darüber hinaus an ihrer Umfangsfläche 40 mit einer ringförmigen Abkantung versehen werden, was dieses Bauteil zusätzlich versteift.

In der Darstellung gemäß Figur 3 wird eine Zudosier-Vorrichtung durch eine Hohlwelle 7, 32 gebildet. Die Hohlwelle 7, 32 weist einerseits eine Steuerscheibenaufhahme 39 auf, an der die relativ zur Segmentscheibe 20 bewegbare Steuerscheibe 28 befestigt ist. Die Hohlwelle 32, deren Wandung mit Bezugszeichen 33 gekennzeichnet ist, ist relativ verdrehbar zu einer Hülse 35. Die Hülse 35 ist ihrerseits in dem in Figur 3 nicht dargestellten Trennelement 6 gelagert, welches den Strömungsquerschnitt in einen ersten Strömungsbereich 16 und einen zweiten Strömungsbereich 17 aufteilt. Die Hohlwelle 7, 32 wird über die in Figur 1 schematisch dargestellte Kupplung 8 und den dort schematisch dargestellten Schrittmotor verdreht. Die Wandung der Hohlwelle 7, 32 (vgl. Bezugszeichen 33) umfaßt eine Dosieröffnung 34. Die die Hohlwelle 7, 32 umschließende, stationär angeordnete Hülse 35 ihrerseits umfaßt eine erste Dosieröffnung 36, welche dem ersten Strömungsbereich 16 zuweist sowie eine dieser gegenüberliegend angeordnete Dosieröffnung 37, welche dem zweiten Strömungsbereich 17 zuweist. Je nach Lage der Dosieröffnung 34 in der Hohlwellenwandung 33 der Hohlwelle 7, 32 kann über eine Überdeckung der Öffnungen 34 bzw. 37 und 34 bzw. 36 ein Zusatzmittel, wie beispielsweise verdampfter Kraftstoff 41, entweder in den ersten Strömungsbereich 16 oder den zweiten Strömungsbereich 17 eingeleitet werden. Der den ersten Strömungsbereich 16 passierende Teilstrom des Gesamtstromes 1, vgl. Bezugszeichen 10 gemäß Figur 1, kann somit mit Zusatzmittel beladen werden; bei entsprechender Verdrehung der Hohlwelle 7, 32 kann bei einer Überdeckung der Dosieröffnung 34 mit der zweiten Dosieröffnung 37 in der Hülse der den zweiten Strömungsquerschnitt 17 passierende Teilstrom 2, vgl. Bezugszeichen 11 gemäß Figur 1, mit Zusatzmittel beaufschlagt werden.

Zur Verringerung des Axialspaltes 45 zwischen der stationär angeordneten Segmentscheibe 20 und der relativ zu diesem an der Hohlwelle 7, 32 angeordneten Steuerscheibe 28 ist die Steuerscheibe 28 durch ein Federelement 38 beaufschlagt, welches sich an einer Stirnseite der ortsfest im Trennelement 6 montierten Hülse 35 abstützt. Die Hohlwelle 7, 32 wird von einem Gasstrom 41, beispielsweise verdampftem Kraftstoff durchströmt, der entsprechend der Überdeckung der Öffnungen 34, 36 bzw. 34, 35 seitlich aus der Hülse 35 in die Strömungsbereiche 16 oder 17 austritt. Die Symmetrieachse der Hohlwelle 7, 32 erstreckt sich koaxial zur Symmetrieachse 42 des Diffusorabschnittes 3 bzw. des Zuleitungsabschnittes 2. Zur Verminderung der Reibung und zur Verringerung der zur Relativbewegung der Hülse 35 der Hohlwelle 7, 32 erforderlichen Antriebsleistung, die durch den Schrittmotor 9 aufzubringen ist, ist an der dem Druckstück 27 zuweisenden Seite der Hohlwelle 7, 32 ein Kegelbereich 43 ausgebildet, dessen Kegelspitze die Punktauflage 31 im Druckstück 27 darstellt. Mit dieser Anordnung ist einerseits eine Reibungsherabsetzung bei der Relativbewegung der Steuerscheibe 28 zur stationär angeordneten Segmentscheibe 20 möglich, andererseits lassen sich durch die gewählte Anordnung Fertigungstoleranzen bzw. Montagetoleranzen zwischen der ortsfest aufgenommenen Segmentscheibe 20 und der Steuerscheibe 28 ausgleichen. Die Drehachse, um welche die Steuerscheibe 28 relativ zur Segmentscheibe 20 verdrehbar ist, ist mit Bezugszeichen 44 gekennzeichnet und fällt mit der Symmetrieachse 42 von Hohlwelle 7, 32 und der Symmetrieachse 42 des Diffusorabschnittes 3 bzw. des Leitungsabschnittes 2 zusammen.

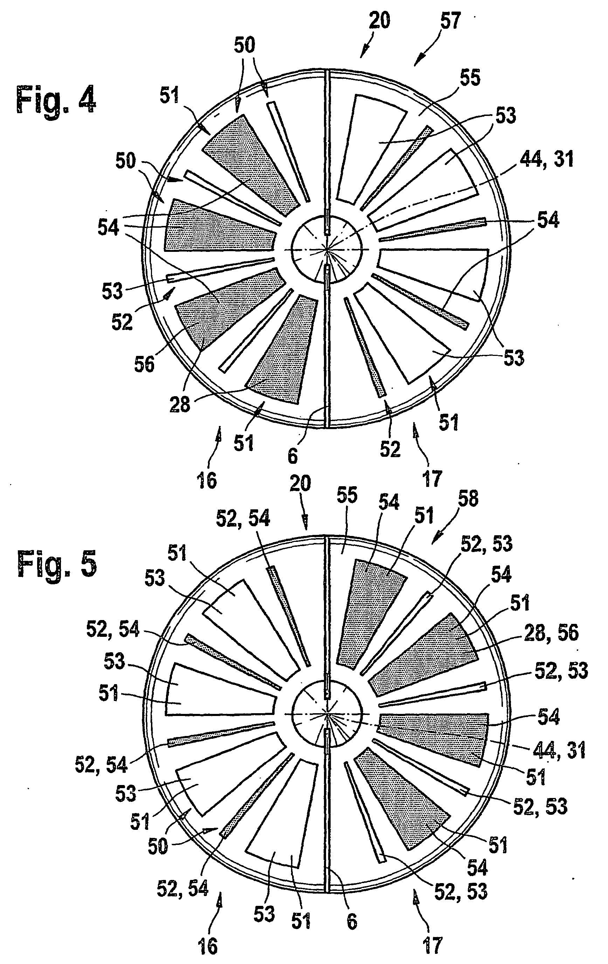

Figur 4 zeigt die Segment- und die Steuerscheibe in einer ersten Ausführungsvariante gemäß der vorgeschlagenen Lösung in einer ersten Schaltstellung befindlich, In den Figuren 4 bis 10 sind geschlossene Bereiche mit grauhinterlegten Schraffuren versehen

In der Draufsicht gemäß der Darstellung in Figur 4 liegt die Steuerscheibe 28, deren Scheibenfläche mit Bezugszeichen 56 gekennzeichnet ist, unter der Segmentscheibe 20, deren Scheibenfläche durch Position 55 gekennzeichnet ist. Gemäß der ersten Ausführungsvariante der Segmentscheibe 20 und der Steuerscheibe 28 umfaßt die Segmentscheibe 20 in Umfangsrichtung regelmäßig nebeneinander angeordnete Öffnungen, die in einer ersten Öffnungsgeometrie 50 ausgebildet sind. In der in Figur 4 dargestellten ersten Ausführungsvariante sind auf der Scheibenfläche 55 der Segmentscheibe 20 nebeneinanderliegende erste und zweite Radialspalte 51 bzw. 52 ausgebildet. Während die Segmentscheibe 20 ortsfest am ersten Flansch 4 gelagert ist, ist die Steuerscheibe 28 um die Drehachse 44 relativ zur Segmentscheibe 20 bewegbar.

Senkrecht zur Zeichenebene gemäß Figur 4 erstreckt sich das als Wandung beispielsweise ausführbare Trennelement 6, welches den der Scheibenfläche 55 der Segmentscheibe 20 entsprechenden Strömungsquerschnitt in einen ersten Strömungsbereich 16 und einen zweiten Strömungsbereich 17 trennt.

Innerhalb des ersten Strömungsbereiches 16 sind die ersten Radialspalte 51 in der Scheibenfläche 55 der Segmentscheibe 20 durch Flächenbereiche der Scheibenfläche 56 der Steuerscheibe 28 verschlossen (vgl. Bezugszeichen 54 in Figur 4). Demgegenüber sind die zweiten Radialspalte 52 in der Scheibenfläche 55 der Segmentscheibe 20 geöffnet, vgl. Position 53 im ersten Strömungsbereich 16 gemäß Figur 4. Dies bedeutet, daß lediglich ein geringer Teilstrom des ungeteilten Gasstromes 1 (vgl. Darstellung gemäß Figur 3) den ersten Strömungsbereich 16 durch die im offenen Zustand 53 stehende zweite Radialspalte 52 durchströmt.

Demgegenüber stehen die ersten Radialspalte 51 innerhalb des zweiten Strömungsbereiches 17 offen; im zweiten Strömungsbereich 17 sind wiederum die zweiten Radialspalte 52 durch entsprechende Bereiche der Scheibenfläche 56 der Steuerscheibe 28 verschlossen. In diesem Zustand ist der den zweiten Strömungsbereich 17 durchströmende Teilstrom 11 wesentlich größer als der Teilstrom 10, welcher den ersten Strömungsbereich 16 durchströmt. Die Trennung der den ersten Strömungsbereich 16 bzw. den zweiten Strömungsbereich 17 durchströmenden Gasströme 1 bzw. 11 erfolgt durch das sich senkrecht zur Zeichenebene beispielsweise als Trennwand ausführbare Element 6. Zur Gewährleistung der korrekten Überdeckungen der jeweils in der Scheibenfläche 55 der Segmentscheibe 20 ausgeführten ersten und zweiten Radialspalte 51 und 52 sind diese ebenfalls in der Scheibenfläche 56 der relativ zur Segmentscheibe 20 bewegbaren Steuerscheibe 28 ausgebildet. Werden die Segmentscheibe 20 bzw. die Steuerscheibe 28 als Blechteile hergestellt, beispielsweise tiefgezogene oder im Wege des Stanzverfahrens hergestellte Bauteile, können die in Figur 3 dargestellten Radialrippen 29 bei der Herstellung der Radialspalte 51 bzw. 52 in der Scheibenfläche 56 der Steuerscheibe 28 erzeugt werden. Die in Figur 4 dargestellten offenen Querschnitte 53 bzw. geschlossenen Querschnitte 54 der ersten und zweiten Radialspalte 51 und 52 in der Scheibenfläche 55 der Segmentscheibe 20 werden in einer ersten Schaltstellung 57 der um die Drehachse 44 bewegbaren Steuerscheibe 28 relativ zur Segmentscheibe 20 erreicht. In der ersten Schaltstellung 57 stellt sich demnach im zweiten Strömungsbereich 17 ein höherer Teilstrom ein als im ersten Strömungsbereich 16.

Figur 5 zeigt die Segment- und die Steuerscheibe gemäß der ersten Ausführungsvariante in einer zweiten Schaltstellung.

In der mit Bezugszeichen 58 gekennzeichneten zweiten Schaltstellung zwischen der ortsfest angeordneten Segmentscheibe 20 und der zu dieser relativ bewegbaren Steuerscheibe 28 liegen die Verhältnisse im Vergleich zur Figur 4 umgekehrt. Während in den Darstellungen gemäß der Figuren 4 und 5 die Ausbrüche in der Segmentscheibe 20 bzw. der Steuerscheibe 28 in einer ersten Öffnungsgeometrie 50 als erste und zweite Radialspalte 51 bzw. 52 beschaffen sind, sind in der zweiten Schaltstellung 58 die im Bereich des zweiten Strömungsbereiches 17 liegenden ersten Radialspalte 51 durch die Scheibenfläche 56 der Steuerscheibe 28 verschlossen, und die zweiten Radialspalte 52 durch die Scheibenfläche 56 der Steuerscheibe 28 freigegeben. Im zweiten Strömungsbereich 17 steht demnach die zweiten Radialspalte 52 in Offenstellung 53, während die ersten Radialspalte 51 in der Scheibenfläche 55 der Segmentscheibe 20 im geschlossenen Zustand 54 stehen.

Im ersten Strömungsbereich 16, der vom zweiten Strömungsbereich 17 durch das sich senkrecht zur Zeichenebene gemäß Figur 5 erstreckende Trennelement 6 getrennt ist, sind die zweiten Radialspalte 52 durch die Scheibenfläche 56 der Steuerscheibe 28 verschlossen. Die ersten Radialspalte 51 hingegen werden durch in der Scheibenfläche 56 der Steuerscheibe 28 korrespondierend zu den ersten Radialspalten 51 in der Scheibenfläche 55 der Segmentscheibe 20 ausgebildete erste Radialspalte 51 geöffnet.

In der zweiten Schaltstellung 58 gemäß der Darstellung in Figur 5 passiert ein Teilstrom den ersten Strömungsbereich 16 durch die im geöffneten Zustand 53 befindliche ersten Radialspalte 51, während im zweiten Strömungsbereich 17 in der zweiten Schaltstellung 58 gemäß Figur 5 lediglich die zweiten Radialspalte 52 in geöffnetem Zustand 53 steht und die dort befindliche erste Radialspalte 51 durch die Scheibenfläche 56 der Steuerscheibe 28 verschlossen ist (vgl. Bezugszeichen 54 gemäß Figur 5).

In vorteilhafter Weise sind zur Überführung der Steuerscheibe 28 von der ersten Schaltstellung 57 in die zweite Schaltstellung 58 lediglich minimale Schaltwege erforderlich, was die zum Umschalten erforderlichen Zeitspannen erheblich verkürzt. Durch die jeweils angedrosselten bzw. freigegebenen ersten und zweiten Strömungsbereiche 16, 17 vermag je nach Schaltstellung 57 bzw. 58 der Steuerscheibe 28 um ihre Drehachse 44 aufgrund der gewählten ersten Öffnungsgeometrie 50 ein 90%- bzw. ein 10%-Teilstrom in die Abströmkanäle 12 bzw. 13 zu strömen. Durch die der Steuerscheibe 28 und der - in den Figuren 4 und 5 durch die Segmentscheibe 20 und die Steuerscheibe 28 verdeckten - nachgeschaltete Zudosier-Vorrichtung wird ein Zusatzmittel 41, wie zum Beispiel verdampfter Kraftstoff, in die Strömungsbereiche 16, 17 eingebracht.

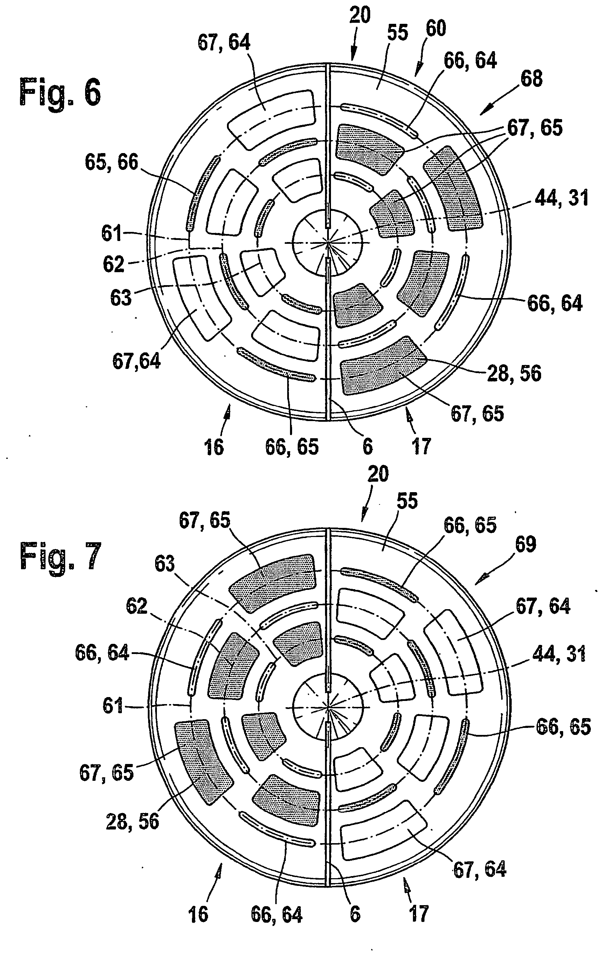

Figur 6 zeigt die Segment- und die Steuerscheibe gemäß einer zweiten Ausführungsvariante in der ersten Schaltstellung.

In Figur 6 ist die erste Schaltstellung an Segmentscheibe 20 und Steuerscheibe 28 mit Bezugszeichen 68 bezeichnet. In der in Figur 6 dargestellten Ausführungsvariante einer Segmentscheibe 20 bzw. einer Steuerscheibe 28 sind die Ausbrüche in diesen jeweils in einer zweiten Öffnungsgeometrie 60 beschaffen. Die gemäß der zweiten Öffnungsgeometrie 60 entweder als Schlitzöffnungen 66 oder Trapezöffnungen 67 beschaffenen Ausbrüche auf der Scheibenfläche 55 der Segmentscheibe 20 bzw. auf der Scheibenfläche 56 der Steuerscheibe 28, liegen auf mehreren konzentrisch zur Drehachse 44 angeordneten Kreisen 61, 62 und 63.

Die feststehend am ersten Flansch 4 aufgenommene Segmentscheibe 20 weist einen ersten Ring 61 auf, an dem - in Umfangsrichtung gesehen - abwechselnd eine Trapezöffnung 67 und eine Schlitzöffnung 66 aufeinander folgen. Vom ersten Ring 61 wird ein zweiter Ring 62 umschlossen, an dem ebenfalls - in Umfangsrichtung der Segmentscheibe 20 gesehen - jeweils eine Schlitzöffnung 66 auf eine Trapezöffnung 67 folgt. Der erste Ring 61 und der zweite Ring 62 umschließen einen dritten Ring 63, der analog zum ersten Ring 61 und zum zweiten Ring 62 eine Abfolge von schlitzförmigen Öffnungen 66 und trapezförmig konfigurierten Öffnungen 67 in Umfangsrichtung enthält.

In der Darstellung gemäß Figur 6 sind innerhalb des ersten Strömungsbereiches 16 die trapezförmigen Öffnungen 67 auf dem ersten Ring 61, dem zweiten Ring 62 sowie auf dem dritten Ring 63 liegend geöffnet, d.h. entsprechende trapezförmige Öffnungen 67 in der Scheibenfläche 56 der Steuerscheibe 28 fluchten mit den trapezförmigen Öffnungen 67 der Scheibenfläche 55 der Segmentscheibe 20. Demgegenüber sind innerhalb des ersten Strömungsbereiches 16 die auf dem ersten Ring 61, dem zweiten Ring 62 sowie dem dritten Ring 63 liegenden schlitzförmigen Öffnungen 66 durch Bereiche der Scheibenfläche 56 der Steuerscheibe 28 verschlossen. Der offene Zustand der trapezförmigen Öffnungen 67 ist durch Bezugszeichen 64 angedeutet, während der verschlossene Zustand der schlitzförmigen Öffnungen 66 auf dem ersten Ring 61, dem zweiten Ring 62 sowie dem dritten Ring 63 durch das Bezugszeichen 65 symbolisiert wird.

Demgegenüber stehen gemäß Figur 6 im zweiten Strömungsbereich 17 die schlitzförmigen Öffnungen 66 auf dem ersten Ring 61, dem zweiten Ring 62 sowie dem dritten Ring 63 in Offenstellung 64, während die auf dem ersten Ring 61, dem zweiten Ring 62 sowie dem dritten Ring 63 angeordneten trapezförmigen Öffnungen 67 im zweiten Strömungsbereich 17 allesamt im verschlossenen Zustand 65 stehen. Aufgrund dessen ist der den zweiten Strömungsbereich 17 passierende Teilstrom des ungeteilten Gasstroms 1 erheblich geringer als derjenige Teilstrom, der den ersten Strömungsbereich 16 passiert. Die um die Drehachse 44 bzw. die Punktauflage 31 relativ bewegbare Steuerscheibe 28 nimmt ihre erste Schaltstellung 68 gemäß Figur 6 ein.

Figur 7 zeigt die Segment- und die Steuerscheibe gemäß der zweiten Ausführungsform in einer zweiten Schaltstellung.

In der Darstellung gemäß Figur 7 ist die zweite Schaltstellung der um die Drehachse 44 bzw. die Punktauflage 31 bewegbaren Steuerscheibe 28 mit Bezugszeichen 69 gekennzeichnet. In der zweiten Schaltstellung 69 liegen die Teilstromverhältnisse gerade umgekehrt zur in Figur 6 dargestellten ersten Schaltstellung 68.

Im ersten Strömungsbereich 16 sind die auf dem ersten Ring 61, dem zweiten Ring 62 und dem dritten Ring 63 in Umfangsrichtung alternierend aufeinanderfolgenden Trapezöffnungen 67 durch die Scheibenfläche 56 der Steuerscheibe 28 verschlossen, während die schlitzförmig ausgebildeten Öffnungen 66 durch die Scheibenfläche 56 der Steuerscheibe 28 innerhalb des ersten Strömungsbereiches 16 allesamt ihre Offenstellung 64 annehmen. In dem durch das Trennelement 6 vom ersten Strömungsbereich 16 abgetrennten zweiten Strömungsbereich 17 hingegen stehen die trapezförmigen Öffnungen 67, die entlang eines ersten Rings 61 bzw. eines zweiten Rings 62 sowie eines dritten Rings 63 auf der Scheibenfläche 55 der Segmentscheibe 20 angeordnet sind, allesamt in ihrer Offenstellung 64. Die in der Scheibenfläche 55 der Segmentscheibe 20 ausgebildeten, schlitzförmig konfigurierten Öffnungen 66 sind hingegen allesamt durch entsprechende Bereiche der Scheibenfläche 56 der Steuerscheibe 28, die um ihre Drehachse 44 bzw. die Punktauflage 31 der Hohlwelle 7, 32 bewegbar ist, verschlossen.

Demzufolge passiert in der zweiten Schaltstellung 69 gemäß der Darstellung in Figur 7 ein geringer Teilstrom des ungeteilten Gasstroms 1 (vgl. Darstellung gemäß der Figuren 1 und 3) den ersten Strömungsbereich 16 lediglich durch die offenstehenden schlitzförmigen Öffnungen 66 auf dem ersten Ring 61, dem zweiten Ring 62 und dem dritten Ring 63. Innerhalb des zweiten Strömungsbereiches 17 strömt ein größerer Teilstrom des ungeteilten Gasstromes 1 (vgl. Darstellung gemäß der Figuren 1 und 3) durch die in ihrer Offenstellung 64 befindlichen trapezförmigen Öffnungen 67 auf dem ersten Ring 61, dem zweiten Ring 62 sowie dem dritten Ring 63.

Da korrespondierend zur Drehung der Steuerscheibe 28 um ihre Drehachse 44 bzw. die Punktauflage 31 eine Verdrehung der Hohlwelle 7, 32 erfolgt, ist sichergestellt, daß der verdampfte Kraftstoff 41 in der ersten Schaltstellung 57 gemäß Figur 4 in den ersten Strömungsbereich 16 einströmt, in der zweiten Schaltstellung 58 gemäß Figur 5 in den zweiten Strömungsbereich 17 eingespült wird, in der in Figur 6 dargestellten ersten Schaltstellung 68 in den zweiten Strömungsbereich 17 eingespült wird und in der in Figur 7 dargestellten zweiten Schaltstellung 69 in den ersten Strömungsbereich 16 gelangt.

Der jeweils kleinere Teilstrom des ungeteilten Gasstroms 1 transportiert den durch die als Hohlwelle 7, 32 ausgeführte Dosiervorrichtung eingespülten verdampften Kraftstoff 41 jeweils zu einem dem ersten ersten Abströmkanal 12 bzw. dem zweiten Abströmkanal 13 nachgeordneten Abgaskatalysator. In den geringeren Teilstrom des ungeteilten Gasstroms 1 muss vorteilhafterweise wenig verdampfter Kraftstoff 41 eindosiert werden, um eine gewünschte Luftzahl von beispielsweise λ=1 zu erreichen. Der kleinere Teilstrom dient dann als Träger für den verdampften Kraftstoff 41 zum Katalysator.

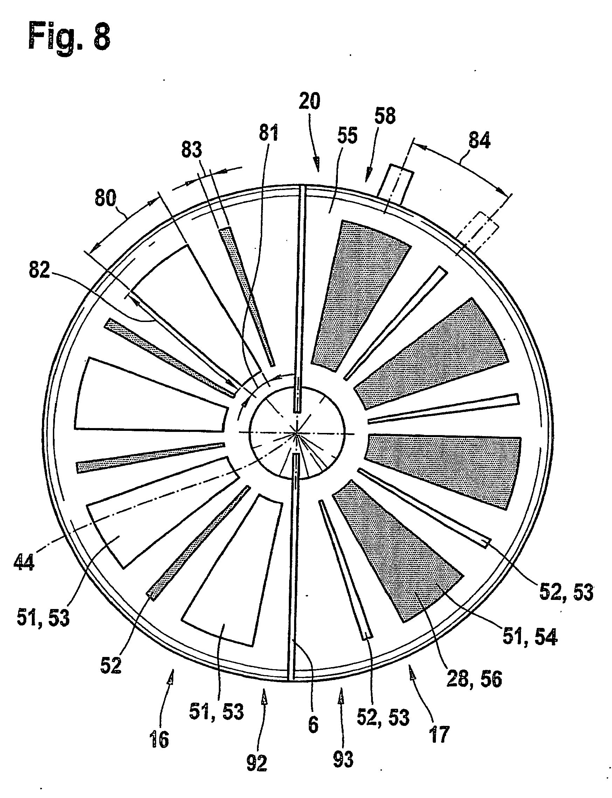

Der Darstellung gemäß Figur 8 ist die Segment- und die Steuerscheibe gemäß der ersten Ausführungsform in Figur 5 in ihrer zweiten Schaltstellung sowie die sich einstellenden Teilströme dargestellt.

Aus der Darstellung gemäß Figur 8 geht in vergrößertem Maßstab die Segmentscheibe 20 mit dahinter bewegbar angeordneter Steuerscheibe 28 hervor. In der zweiten Schaltstellung 58 stehen die ersten Radialspalte 51 jeweils in ihrer Offenstellung 53, während die innerhalb des ersten Strömungsbereiches 16 liegende zweiten Radialspalte 52 sämtlich durch die Scheibenfläche 56 der Steuerscheibe 28 im ersten Strömungsbereich 16 geschlossen sind.

Die als erste Radialspalte 51 ausgebildeten Öffnungen gemäß der ersten Öffnungsgeometrie 50 der Segmentscheibe 20 nach Figur 8 ausgebildeten Radialspalte weisen eine erste Breite 80 sowie eine zweite Breite 81 auf Die erste Breite 80 übersteigt die zweite Breite 81. Ausgehend von der zweiten Breite 81 erstreckt sich die ersten Radialspalte 51 in radiale Richtung über eine Spaltlänge 82, während sich deren Breite von der zweiten Breite 81 in radiale Richtung kontinuierlich auf die erste Breite 80 steigert.

Demgegenüber sind die zweiten Radialspalte 52 von einer erheblich geringeren dritten Breite 83. Auch die dritte Breite 83 steigert sich in radiale Richtung über die Spaltlänge 82 der zweiten Radialspalte 52 gesehen in der Scheibenfläche 55 der Segmentscheibe 20.

In der zweiten Schaltstellung 58 der Steuerscheibe 28 relativ zur Segmentscheibe 20 passiert den ersten Strömungsbereich 16, der vom zweiten Strömungsbereich 17 durch die sich senkrecht zur Zeichenebene gemäß Figur 8 erstreckende Trennwand 6 getrennt ist, ein Teilstrom 10. Dieser entspricht etwa 90% des ungeteilten Gasstroms 1, der den Zuleitungsabschnitt 2 bzw. den diesem nachgeschalteten Diffusorabschnitt 3 gemäß der Darstellung in Figur 1 und 3 passiert.

Innerhalb des zweiten Strömungsbereiches 17 steht in der in Figur 8 dargestellten zweiten Schaltstellung 58 der Segmentscheibe 20 und der Steuerscheibe 28 lediglich die zweiten Radialspalte 52 in der Scheibenfläche 55 der Segmentscheibe 20 in ihrer Offenstellung 53, während die ersten Radialspalte 51 allesamt ihre geschlossene Stellung 54 annehmen. In der in Figur 8 dargestellten zweiten Schaltstellung 58 passiert den zweiten Strömungsbereich 17 ein Teilstrom 93, der etwa 10% des ungeteilten Gasstroms 1 entspricht, der den Zuleitungsabschnitt 2 sowie den Diffusorabschnitt 3 gemäß der Darstellung in den Figuren 1 und 3 passiert.

Ein Umschalten der Steuerscheibe 28 um die Drehachse 44 bzw. um die Punktauflage 31 von der in Figur 8 dargestellten zweiten Schaltstellung 58 in die erste Schaltstellung 57 und umgekehrt erfolgt entlang eines ersten Stellweges 84. Der Stellweg ist sehr kurz, so daß sich bei einer Umschaltung von der ersten Schaltstellung 57 in die zweite Schaltstellung 58 und umgekehrt extrem kurze Schaltzeiten erzielen lassen, die ein schnelles Ansprechen der Veränderung der die Strömungsbereiche 16 und 17 passierenden Teilströme ermöglicht. Gleichzeitig mit dem Umschalten der um die Drehachse 44 bzw. die Punktauflage 31 verdrehbaren Steuerscheibe 28 erfolgt ein Umschalten der Einleitung des Zusatzmittels (z.B. verdampfter Kraftstoff) jeweils in denjenigen der Strömungsbereiche 16, 17, welcher vom kleineren der Teilströme, d.h. vom mit Bezugszeichen 93 bezeichneten Teilstrom durchströmt wird, der etwa 10% des ungeteilten Gasstroms 1 durch den Zuleitungsabschnitt 2 und den Diffusorabschnitt 3 gemäß der Darstellung in den Figuren 1 und 3 entspricht.

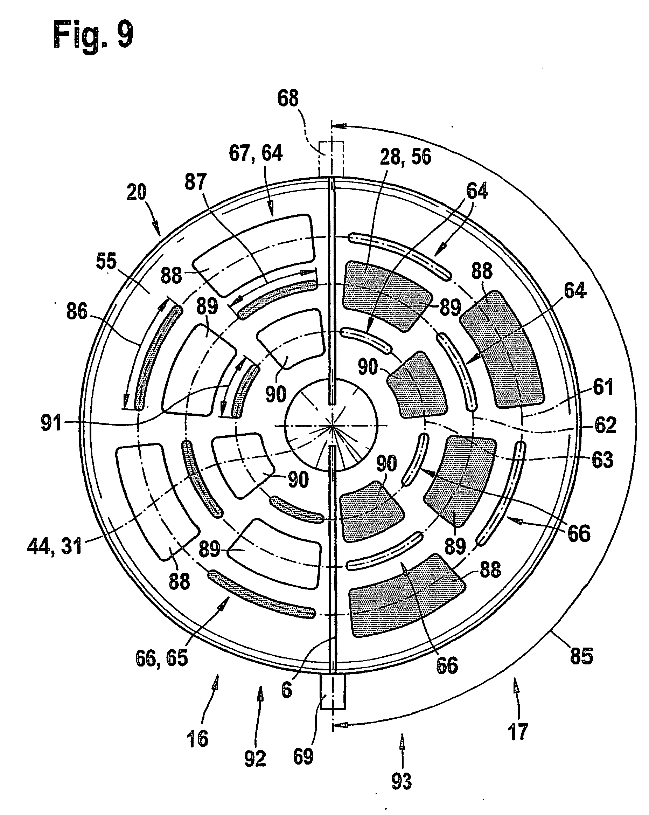

Der Darstellung gemäß Figur 9 ist eine Segment- und eine Steuerscheibe zu entnehmen, die gemäß der zweiten Ausführungsvariante in Figur 6 ausgebildet sind.

In der in Figur 9 in vergrößertem Maßstab dargestellten zweiten Schaltstellung 68 von Segmentscheibe 20 und Steuerscheibe 28 sind die trapezförmigen Öffnungen 67 innerhalb des ersten Strömungsbereiches 16 in ihre Offenstellung 64 gefahren. Sie fluchten zu den trapezförmig konfigurierten Öffnungen 67 in der Scheibenfläche 56 der Steuerscheibe 28. Die jeweils auf dem ersten Ring 61, dem zweiten Ring 62 und dem dritten Ring 63 angeordneten, schlitzförmigen Öffnungen 66 sind innerhalb des ersten Strömungsbereiches 16 durch Bereiche der Scheibenfläche 56 der Steuerscheibe 28 verschlossen. Auf dem ersten Ring 61, dem zweiten Ring 62 und dem dritten Ring 63 folgen trapezförmige Öffnungen 67 auf schlitzförmige Öffnungen 66 in alternierender Abfolge.

Die Länge der schlitzförmigen Öffnungen 66 auf der Scheibenfläche 55 der Segmentscheibe 20 ist durch Bezugszeichen 86 in Figur 9 gekennzeichnet und bezeichnet die Länge einer auf dem ersten Ring 61 ausgebildeten schlitzförmigen Öffnung 66 zwischen zwei Trapezöffnungen 67, die ebenfalls auf dem ersten Ring 61 angeordnet sind. Demgegenüber weisen die schlitzförmigen Öffnungen 66, die auf einem konzentrisch zum ersten Ring 61 ausgebildeten zweiten Ring 62 auf der Scheibenfläche 55 der Segmentscheibe 20 liegen, eine etwas geringere zweite Schlitzlänge 87 - in Umfangsrichtung auf der Scheibenfläche 55 gesehen - auf. Die zwischen zwei trapezförmigen Öffnungen 67 auf dem dritten Ring 63 liegenden schlitzförmigen Öffnungen 66 weisen eine Länge in Umfangsrichtung auf, die durch Bezugszeichen 91 in der Darstellung gemäß Figur 9 identifiziert ist. Aufgrund der Anordnung der trapezförmigen Öffnungen 67 auf zueinander konzentrischen Ringen 61, 62, 63 stellen sich auf der Scheibenfläche 55 der Segmentscheibe 20 und auf der mit dieser zusammenwirkenden Scheibenfläche 56 der Steuerscheibe 28 unterschiedliche Trapezgeometrien 88, 89, 90 ein. Auf dem ersten Ring 61 angeordnete trapezförmige Öffnungen 67 erstrecken sich über in Umfangsrichtung gesehen größere Längen 88, verglichen mit den trapezförmigen Öffnungen 67, die auf dem konzentrisch zum ersten Ring 61 verlaufenden zweiten Ring 62 in der Scheibenfläche 55 der Segmentscheibe 20 ausgebildet sind. Zwar bleibt der Abstand der Kanten der trapezförmigen Öffnungen 67 auf dem ersten Ring 61 und dem konzentrisch zu diesem verlaufenden zweiten Ring 62 auf der Scheibenfläche 55 der Segmentscheibe 20 konstant, jedoch sind die trapezförmigen Öffnungen 67, die alternierend zu schlitzförmigen Öffnungen 66 in der Scheibenfläche 55 der Segmentscheibe 20 ausgebildet sind, in Umfangsrichtung gesehen, kürzer als die trapezförmigen Öffnungen 67, die auf dem ersten Ring 61 der Segmentscheibe 20 liegen. Schließlich sind diejenigen trapezförmigen Öffnungen 67, die auf dem dritten Ring 63 alternierend zu schlitzförmigen Öffnungen 66 angeordnet sind, wiederum - in Umfangsrichtung gesehen - kürzer als diejenigen trapezförmigen Öffnungen 67, die mit schlitzförmigen Öffnungen 66 alternierend auf dem zweiten Ring 62 in der Scheibenfläche 55 der Segmentscheibe 20 ausgebildet sind. Wenngleich in Figur 9 nicht explizit dargestellt, gilt dies ebenso für die in der Scheibenfläche 56 der Steuerscheibe 28 ausgebildeten Öffnungen - seien es trapezförmig ausgebildete Öffnungen 67, seien es schlitzförmig ausgebildete Öffnungen 66.

Da innerhalb des ersten Strömungsbereiches 16 gemäß der Darstellung in Figur 9 sämtliche trapezförmigen Öffnungen 67 auf dem ersten Ring 61, dem zweiten Ring 62 und auf dem dritten Ring 63 ihre Offenstellung 64 einnehmen, stellt sich innerhalb des ersten Strömungsbereiches 16 ein Teilstrom 92 des ungeteilten Gasstroms 1 ein, der den Zuleitungsabschnitt 2 und den Diffusorabschnitt 3 gemäß der Darstellung in den Figuren 1 und 3 passiert. Die schlitzförmig konfigurierten Öffnungen 66 auf dem ersten Ring 61, dem zweiten Ring 62 sowie dem dritten Ring 63 hingegen sind in der in Figur 9 wiedergegebenen Drehlage der Scheibenfläche 56 der Steuerscheibe 28 relativ zur Segmentscheibe 20 verschlossen. Der erste Strömungsbereich 16 ist vom zweiten Strömungsbereich 17 durch das senkrecht zur Zeichenebene gemäß Figur 9 verlaufende Trennelement 6 - im einfachsten Falle eine Trennwand - getrennt Innerhalb des zweiten Strömungsbereiches 17 stellt sich entsprechend der Schaltstellung der Steuerscheibe 28 relativ zur ortsfest angeordneten Segmentscheibe 20 ein reduzierter Teilstrom 93 von etwa 10% des den Zuleitungsabschnitt 2 und den Diffusorabschnitt 3 passierenden ungeteilten Gasstroms 1 (vgl. Darstellung gemäß Figur 1 und 3) ein.

Innerhalb des zweiten Strömungsbereiches 17 stehen lediglich die auf den konzentrischen Ringen 61, 62 und 63 alternierend zu den trapezförmigen Öffnungen 67 ausgebildeten schlitzförmigen Öffnungen 66 in ihrer Offenstellung 64. Die trapezförmig konfigurierten Öffnungen 67 auf den konzentrischen Ringen 61, 62 und 63 auf der Scheibenfläche 55 der Segmentscheibe 20 sind jedoch durch Bereiche der Scheibenfläche 56 der Steuerscheibe 28 verschlossen. Aufgrund dessen stellt sich innerhalb des zweiten Strömungsbereiches 17 ein Teilstrom 93 des ungeteilten Gasstroms 1 ein, der etwa 10% des ungeteilten Gasstroms 1 entspricht. Die Steuerscheibe 28, die um ihre Drehachse 44 bzw. die Punktauflage 31 verdrehbar ist, kann - angedeutet durch den Doppelpfeil gemäß Figur 9 - sowohl im Uhrzeigersinn als auch im Gegenuhrzeigersinn verdreht werden. Gemäß der Darstellung in Figur 9 ist zur Umschaltung der Steuerscheibe 28 von ihrer ersten Schaltstellung 68 in ihre zweite Schaltstellung 69 ein zweiter Stellweg 85 erforderlich, der in diesem Falle 180° beträgt.

Aufgrund der Kopplung der Verdrehbewegung der Steuerscheibe 28 mit der Drehbewegung der Hohlwelle 7, 32 um die Punktauflage 31 (vgl. Darstellung gemäß Figur 3) ist sichergestellt, daß das Einspülen eines Zusatzmittels, wie beispielsweise eines verdampften Kraftstoffstroms 41, in den zweiten Strömungsbereich 17 abströmseitig von der Steuerscheibe 28 erfolgt. Das in den zweiten Strömungsbereich 17 eingespülte Zusatzmittel wird durch den Teilstrom 93, der etwa 10% des ungeteilten Gasstroms 1 entspricht, in den ersten Abströmkanal 12 (vgl. Darstellung gemäß Figur 1) eingebracht, so daß es einem dem ersten Abströmkanal 12 nachgeschalteten Abgaskatalysator aufgegeben werden kann. Parallel dazu erfolgt der Eintrag eines größeren Teilstroms 92, der etwa 90% des ungeteilten Gasstroms 1 im Zuleitungsabschnitt 2 bzw. im Diffusorabschnitt 3 (vgl. Darstellung gemäß Figur 1, 3) entspricht, in den zweiten Abströmkanal 13, der dem in Figur 9 dargestellten ersten Strömungsbereich 16 nachgeschaltet ist.

Ein Vorteil der Anordnung der trapezförmigen Öffnungen 67 und der schlitzförmigen Öffnungen 66 gemäß Figur 9 ist, dass sich der kleinere Teilstrom 93, der durch die schlitzförmigen Öffnungen 66 in Schaltstellung 68 in den Strömungsbereich 17 eintritt, gleichmäßig über den Querschnitt des Strömungsbereichs 17 verteilt. Dadurch wird das zudosierte Zusatzmittel, also beispielsweise der verdampfte Kraftstoff 41, besser in dem Teilstrom mitgetragen.

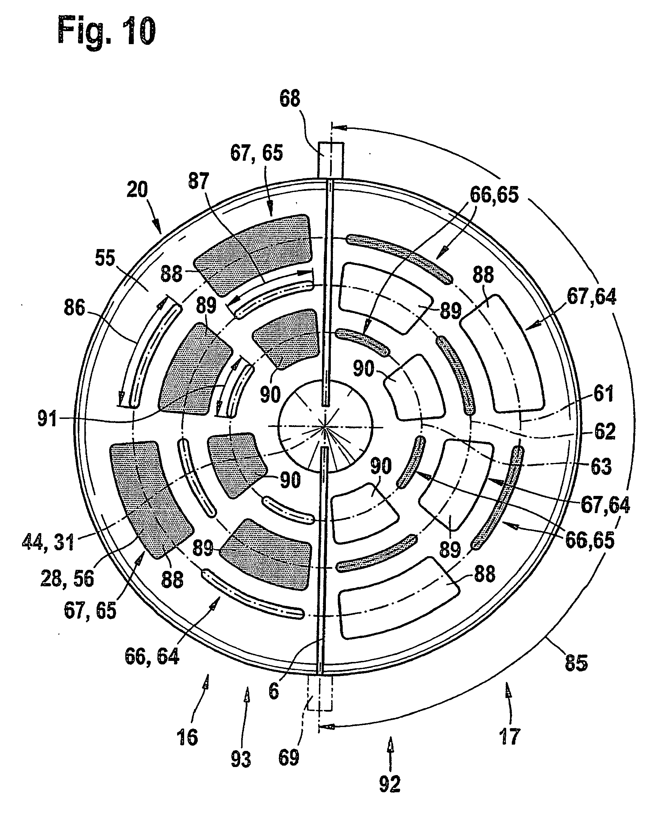

Der Darstellung gemäß Figur 10 ist eine Segment- und eine Steuerscheibe entnehmbar gemäß der in Figur 7 dargestellten zweiten Ausführungsvariante der vorgeschlagenen Lösung.

In dieser Darstellung ist die Steuerscheibe 28 um ihre Drehachse 44 bzw. ihre Punktauflage 31 (vgl. Darstellung gemäß Figur 3) in ihre erste Schaltstellung 68 gestellt. In der ersten Schaltstellung 68 liegt das Teilstrom-Aufteilungsverhältnis gerade umgekehrt zum Teilstrom-Aufteilungsverhältnis gemäß der Darstellung in Figur 9. Innerhalb des ersten Strömungsbereiches 16 sind die alternierend zu trapezförmigen Öffnungen 67 auf konzentrischen Ringen 61, 62, 63 angeordneten schlitzförmigen Öffnungen 66 unterschiedlicher Umfangslängen 86, 87, 91 in ihre Offenstellung 64 gestellt, während die auf den konzentrischen Ringen 61, 62 und 63 angeordneten trapezförmigen Öffnungen 67 unterschiedlicher Öffnungsgeometrie 88, 89, 91 innerhalb des ersten Strömungsbereiches 16 durch die Scheibenfläche 56 der Steuerscheibe 28 allesamt verschlossen sind. Daher stellt sich innerhalb des ersten Strömungsbereiches 16 ein reduzierter Teilstrom 93 ein, welcher einem angedrosselten Zustand entspricht im Vergleich zu dem Teilstrom 92, der den zweiten Strömungsbereich 17 passiert. Der den zweiten Strömungsbereich 17 durch die in ihrer Offenstellung 64 befindlichen trapezförmigen Öffnungen 67 passierende Teilstrom entspricht etwa 90% des ungeteilten Gasstromes 1 gemäß der Darstellung in den Figuren 1 und 3 vor Passage der Segmentscheibe 20 und der Steuerscheibe 28 innerhalb des Vollquerschnittes des Diffusorabschnittes 3.

Innerhalb des zweiten Strömungsbereiches 17, der vom ersten Strömungsbereich 16 durch eine sich senkrecht zur Zeichenebene gemäß Figur 10 erstreckende Trennwand 6 getrennt ist, sind die auf den konzentrischen Ringen 61, 62 und 63 zwischen den trapezförmigen Öffnungen 67 unterschiedlicher Trapezgeometrie 88, 89 und 90 befindlichen schlitzförmigen Öffnungen 66 durch Bereiche der Scheibenfläche 56 der Steuerscheibe 28 verschlossen. In der in Figur 10 dargestellten Schaltstellung erfolgt aufgrund der Kopplung der Drehbewegung von Steuerscheibe 28 und der als Zudosier-Einrichtung dienenden Hohlwelle 7, 32 (vgl. Darstellung gemäß Figur 3) ein Einspülen eines Zusatzmittels 41 in den ersten Strömungsbereich 16, der von dem kleineren Teilstrom 93 passiert wird, der etwa 10% des ungeteilten Gasstroms 1 (vgl. Darstellung gemäß Figur 1 und 3) entspricht.

In den gemäß der Figuren 8, 9 und 10 dargestellten Schaltstellungen 58, 68 bzw. 69 nimmt jeweils einer der Strömungsbereiche 16, 17 einen angedrosselten Zustand ein, während der jeweils andere der Strömungsquerschnitte 16, 17 die Passage eines etwa 90% des ungeteilten Gasstroms 1 entsprechenden Teilstromes 92 zuläßt. Durch die erfindungsgemäß vorgeschlagene Anordnung einer stationär im Strömungsquerschnitt angeordneten Segmentscheibe 20 und eine abströmseitig hinter dieser liegenden, relativ zur Segmentscheibe 20 bewegbaren Steuerscheibe 28 ist eine gleichmäßige Anströmung eines Abgaskatalysators gewährleistet, wobei die Einspülung eines Zusatzmittels, wie etwa verdampfter Kraftstoff 41, stets in denjenigen der Strömungsbereiche 16, 17 sichergestellt ist, der von dem kleineren Teilstrom, d.h. dem Teilstrom 93 passiert wird, der etwa 10% des ungeteilten Gasstroms 1 im Zuleitungsabschnitt 2 bzw. im Diffusorabschnitt 3 entspricht.

In einer nicht dargestellten Ausführungsform der vorliegenden Erfindung enthält die Segmentscheibe 20 nur eine Sorte von Öffnungen (z.B. entsprechend den 1. Radialspalten 51 oder den trapezförmigen Öffnungen), die in einer Schaltstellung auf einer Hälfte der Segmentscheibe 20 vollständig geöffnet und auf der anderen Hälfte durch die Steuerscheibe 28 vollständig abgedeckt sind und in der anderen Schaltstellung umgekehrt. Dabei entsteht trotz Abdeckung der Öffnungen ein geringer Teilstrom in diesem Strömungsbereich durch entsprechende Wahl der Breite des Spaltes 45 (siehe Figur 3), durch den dann der geringe Teilstrom an der Steuerscheibe 28 vorbei strömen kann. Bei dieser Ausführungsform lässt sich vorzugsweise die Steuerscheibe 28 in axialer Richtung relativ zu der Segmentscheibe 20 bewegen und so die Breite des Spaltes 45 variieren.

## Patentansprüche

1. Vorrichtung zum Aufteilen eines ungeteilten Gasstroms (1), der in einem Leitungsabschnitt (2, 3) strömt, in Teilströme (10,11), die in voneinander getrennte Abströmkanälen (12, 13) abströmen und eine regelbare Dosiervorrichtung (7, 32,35) vorgesehen ist, mit der ein weiterer Gasstrom (41) jeweils einem der Teilströme (10, 11) zudosierbar ist, **dadurch gekennzeichnet, daß** zwischen dem Leitungsabschnitt (2, 3) und den Abströmkanälen (12, 13) ein den ungeteilten Gasstrom (1) in einen ersten und einen zweiten Strömungsbereich (16, 17) aufteilendes Trennelement (6) aufgenommen ist und erste und zweite Ausbrüche (51, 52; 66, 67) einer angeströmten Segmentscheibe (20) mittels einer zu dieser relativ bewegbaren Steuerscheibe (28) freigeb- oder verschließbar sind.

2. Vorrichtung gemäß Anspruch 1, **dadurch gekennzeichnet, daß** die Steuerscheibe (28) an einer relativ bewegbaren Hohlwelle (7, 32) der Dosiervorrichtung (7, 32, 35) aufgenommen ist.

3. Vorrichtung gemäß Anspruch 2, **dadurch gekennzeichnet, daß** die die Steuerscheibe (28) aufnehmende Hohlwelle (7, 32) mittels eines Schrittmotors (9) um einen ersten Stellweg (84) oder einen zweiten Stellweg (85) relativ zu der Segmentscheibe (20) verstellbar ist.

4. Vorrichtung gemäß Anspruch 2, **dadurch gekennzeichnet, daß** die Steuerscheibe (28) an der Hohlwelle (7, 32) an einer kegelförmig ausgebildeten Steuerscheibenaufnahme (39) aufgenommen ist, deren Spitze (31) eine Punktauflage (31) darstellt, über welche die Hohlwelle (7, 32) in der Segmentscheibe (20) abgestützt ist.

5. Vorrichtung gemäß Anspruch 2, **dadurch gekennzeichnet, daß** in der Hohlwellenwand (33) der Hohlwelle (7, 32) eine Dosieröffnung (34) ausgebildet ist, welche mit einer Dosieröffnung (36) oder einer zweiten Dosieröffnung (37) einer die Hohlwelle (7, 32) umschließenden Hülse (35) in Überdeckung bringbar ist.

6. Vorrichtung gemäß Anspruch 5, **dadurch gekennzeichnet, daß** über die erste Dosieröffnung (36) ein Zusatzmittel (41) in den ersten Strömungsbereich (16) und über die zweite Dosieröffnung (37) in den zweiten Strömungsbereich (17) einleitbar ist.

7. Vorrichtung gemäß Anspruch 1, **dadurch gekennzeichnet, daß** die Steuerscheibe (28) als tiefgezogenes Blechteil mit einer versteifenden Umrandung (40) ausgeführt ist.

8. Vorrichtung gemäß Anspruch 7, **dadurch gekennzeichnet, daß** die Steuerscheibe (28) sich in Radialrichtung erstreckende Radialrippen (29) aufweist.

9. Vorrichtung gemäß Anspruch 7, **dadurch gekennzeichnet, daß** die Steuerscheibe (28) sich in Radialrichtung erstreckende Sicken (30) aufweist.

10. Vorrichtung gemäß Anspruch 1, **dadurch gekennzeichnet, daß** die Segmentscheibe (20) über eine Versteifung (22) an einem ersten Flansch (4) abgestützt ist.

11. Vorrichtung gemäß Anspruch 10, **dadurch gekennzeichnet, daß** die Versteifung (22) einen Stützstab (26) umfaßt, der sich an einem Druckstück (27) im Zentrum der Segmentscheibe (20) abstützt.

12. Vorrichtung gemäß Anspruch 1, **dadurch gekennzeichnet, daß** die Ausbrüche (51, 52) in Scheibenflächen (55, 56) der Segmentscheibe (20) oder der Steuerscheibe (28) in einer ersten Öffnungsgeometrie (50) als sich in Radialrichtung erstreckende Radialspalte ausgeführt sind.

13. Vorrichtung gemäß Anspruch 12, **dadurch gekennzeichnet, daß** die die Ausbrüche bildenden ersten und zweiten Radialspalte (51, 52) eine erste Breite (80) bzw. eine dritte Breite (83) aufweisen, und die erste Breite (80) die dritte Breite (83) übersteigt.

14. Vorrichtung gemäß Anspruch 13, **dadurch gekennzeichnet, daß** die Ausbrüche (51, 52) in den Scheibenflächen (55, 56) der Segmentscheibe (20) und der Steuerscheibe (28) in alternierender Abfolge angeordnet sind.

15. Vorrichtung gemäß Anspruch 1, **dadurch gekennzeichnet, daß** die Ausbrüche (66, 67) in Scheibenflächen (55, 56) der Segmentscheibe (20) und der Steuerscheibe (28) in einer zweiten Öffnungsgeometrie (60) als in alternierender Abfolge angeordnete schlitzförmige oder trapezförmige Öffnungen ausgebildet sind.

16. Vorrichtung gemäß Anspruch 15, **dadurch gekennzeichnet, daß** die schlitzförmigen Öffnungen (66) und die trapezförmigen Öffnungen (67) auf konzentrischen Ringen (61, 62, 63) in den Scheibenflächen (55, 56) angeordnet sind.

17. Vorrichtung gemäß Anspruch 15, **dadurch gekennzeichnet, daß** der Durchtrittsquerschnitt der schlitzförmigen und der trapezförmigen Öffnungen (66, 67) in den Scheibenflächen (55, 56) in radiale Richtung bezogen auf die Drehachse (44) der Steuerscheibe (28) zunimmt.

18. Vorrichtung gemäß Anspruch 1, **dadurch gekennzeichnet, daß** in einer die Ausbrüche (51, 67) in den Scheibenflächen (55, 56) der Segmentscheibe (20) und der Steuerscheibe (28) im zweiten Strömungsbereich (17) in Überdeckung bringender Schaltstellung (57, 69) sich im zweiten Strömungsbereich (17) ein Teilstrom (11, 92) einstellt, der etwa 90% des ungeteilten Gasstroms (1) entspricht und sich im ersten Strömungsbereich (16) ein Teilstrom (10, 93) einstellt, der etwa 10% des ungeteilten Gasstroms (1) entspricht.

19. Vorrichtung gemäß Anspruch 1, **dadurch gekennzeichnet, daß** in die Ausbrüche (51, 67) in den Scheibenflächen (55, 56) der Segmentscheibe (20) und der Steuerscheibe (28) innerhalb des ersten Strömungsbereiches (16) in Überdeckung bringender Schaltstellung (58, 68) sich im ersten Strömungsbereich (16) ein Teilstrom (11, 92) einstellt, der etwa 90% des ungeteilten Gasstromes (1) entspricht und sich im zweiten Strömungsbereich (17) ein Teilstrom (10, 93) einstellt, der etwa 10% des ungeteilten Gasstroms (1) entspricht.

20. Vorrichtung gemäß der Ansprüche 18 oder 19, **dadurch gekennzeichnet, daß** über die Dosiereinrichtung (7, 32, 35) ein Zusatzmittel (41) in denjenigen der Strömungsbereiche (16, 17) eingebracht wird, welcher den Teilstrom (10, 93) führt, der etwa 10% des ungeteilten Gasstroms (1) entspricht.

21. Verwendung einer Vorrichtung gemäß einer oder mehrerer der vorhergehenden Ansprüche zum Eintrag eines Zusatzmittels (41) in einen Abgaskatalysator.

## Claims

1. Device for the division of an undivided gas stream (1) which flows in a line section (2, 3) into part-streams (10, 11) which flow out into outflow ducts (12, 13) separated from one another, a regulatable metering device (7, 32, 35) being provided, by means of which a further gas stream (41) can be metered in each case to one of the part-streams (10, 11), **characterized in that**, between the line section (2, 3) and the outflow ducts (12, 13), a separating element (6) dividing the undivided gas stream (1) into a first and a second flow region (16, 17) is received, and first and second broken-out portions (51, 52; 66, 67) of a flow-impinged segmental disc (20) can be opened or closed by means of a control disc (28) moveable in relation to the latter.

2. Device according to Claim 1, **characterized in that** the control disc (28) is received on a relatively moveable hollow shaft (7, 32) of the metering device (7, 32, 35).

3. Device according to Claim 2, **characterized in that** the hollow shaft (7, 32) receiving the control disc (28) can be adjusted in relation to the segmental disc (20) by means of a stepping motor (9) by the amount of a first actuating travel (84) or a second actuating travel (85).

4. Device according to Claim 2, **characterized in that** the control disc (28) is received on the hollow shaft (7, 32) at a conically designed control-disc receptacle (39), the tip (31) of which constitutes a point support (31), via which the hollow shaft (7, 32) is supported in the segmental disc (20).

5. Device according to Claim 2, **characterized in that** a metering orifice (34) is formed in the hollow-shaft wall (33) of the hollow shaft (7, 32) and can be brought into congruence with a metering orifice (36) or a second metering orifice (37) of a sleeve (35) surrounding the hollow shaft (7, 32).

6. Device according to Claim 5, **characterized in that** an additive (41) can be introduced into the first flow region (16) via the first metering orifice (36) and into the second flow region (17) via the second metering orifice (37).

7. Device according to Claim 1, **characterized in that** the control disc (28) is designed as a deep-drawn sheet-metal part with a reinforcing border (40).

8. Device according to Claim 7, **characterized in that** the control disc (28) has radial ribs (29) extending in the radial direction.

9. Device according to Claim 7, **characterized in that** the control disc (28) has beads (30) extending in the radial direction.

10. Device according to Claim 1, **characterized in that** the segmental disc (20) is supported on a first flange (4) via a reinforcement (22).

11. Device according to Claim 10, **characterized in that** the reinforcement (22) comprises a supporting bar (26) which is supported on a thrust piece (27) in the centre of the segmental disc (20).

12. Device according to Claim 1, **characterized in that** the broken-out portions (51, 52) in disc surfaces (55, 56) of the segmental disc (20) or of the control disc (28) are designed, in a first orifice geometry (50), as radial gaps extending in the radial direction.

13. Device according to Claim 12, **characterized in that** the first and second radial gaps (51, 52) forming the broken-out portions have respectively a first width (80) and a third width (83), and the first width (80) exceeds the third width (83).

14. Device according to Claim 13, **characterized in that** the broken-out portions (51, 52) in the disc surfaces (55, 56) of the segmental disc (20) and of the control disc (28) are arranged in an alternating sequence.

15. Device according to Claim 1, **characterized in that** the broken-out portions (66, 67) in disc surfaces (55, 56) of the segmental disc (20) and of the control disc (28) are designed, in a second orifice geometry (60), as slot-shaped or trapezoidal orifices arranged in an alternating sequence.

16. Device according to Claim 15, **characterized in that** the slot-shaped orifices (66) and the trapezoidal orifices (67) are arranged on concentric rings (61, 62, 63) in the disc surfaces (55, 56).

17. Device according to Claim 15, **characterized in that** the passage cross section of the slot-shaped and trapezoidal orifices (66, 67) in the disc surfaces (55, 56) increases in the radial direction with respect to the axis of rotation (44) of the control disc (28).

18. Device according to Claim 1, **characterized in that**, in a switching position (57, 69) bringing the broken-out portions (51, 67) in the disc surfaces (55, 56) of the segmental disc (20) and of the control disc (28) into congruence in the second flow region (17), a part-stream (11, 92) corresponding approximately to 90% of the undivided gas stream (1) is established in the second flow region (17) and a part-stream (10, 93) corresponding approximately to 10% of the undivided gas stream (1) is established in the first flow region (16).

19. Device according to Claim 1, **characterized in that**, in the switching position (58, 68) bringing broken-out portions (51, 67) in the disc surfaces (55, 56) of the segmental disc (20) and of the control disc (28) into congruence within the first flow region (16), a part-stream (11, 92) corresponding approximately to 90% of the undivided gas stream (1) is established in the first flow region (16) and a part-stream (10, 93) corresponding approximately to 10% of the undivided gas stream (1) is established in the second flow region (17).

20. Device according to Claim 18 or 19, **characterized in that** an additive (41) is introduced via the metering device (7, 32, 35) into that of the flow regions (16, 17) which carries the part-stream (10, 93) corresponding approximately to 10% of the undivided gas stream (1).

21. Use of a device according to one or more of the preceding claims for the introduction of an additive (41) into an exhaust-gas catalytic converter.

## Revendications

1. Dispositif pour diviser un flux gazeux non divisé (1), qui s'écoule dans un segment de conduite (2, 3), en parties de flux (10, 11) s'écoulant dans des canaux d'écoulement (12, 13) séparés l'un de l'autre, dans lequel il est prévu un dispositif de dosage réglable (7, 32, 35) au moyen duquel un autre flux gazeux (41) est ajouté respectivement par dosage à l'une des parties de flux (10, 11),
**caractérisé en ce qu'**
un élément de séparation (6) divisant le flux gazeux non divisé (1) en un premier et un deuxième domaine d'écoulement (16, 17) est logé entre le segment de conduite (2, 3) et les canaux d'écoulement (12, 13) et des premières et deuxièmes découpes (51, 52 ; 66, 67) d'un disque segmenté (20) sollicité par l'écoulement sont ouvertes ou fermées au moyen d'un disque de commande (28) mobile par rapport à celui-ci.

2. Dispositif selon la revendication 1,
**caractérisé en ce que**
le disque de commande (28) est logé sur un arbre creux (7, 32) relativement mobile du dispositif de dosage (7, 32, 35).

3. Dispositif selon la revendication 2,
**caractérisé en ce que**
l'arbre creux (7, 32) logeant le disque de commande (28) effectue, au moyen d'un moteur pas à pas (9), une première course de déplacement (84) ou une deuxième course de déplacement (85) par rapport au disque segmenté (20).

4. Dispositif selon la revendication 2,
**caractérisé en ce que**
le disque de commande (28) est logé sur l'arbre creux (7, 32) dans un logement de disque de commande (39) de forme conique, dont le sommet (31) représente un support ponctuel (31) par lequel l'arbre creux (7, 32) s'appuie dans le disque segmenté (20).

5. Dispositif selon la revendication 2,
**caractérisé en ce qu'**
une ouverture de dosage (34) formée dans la paroi (33) de l'arbre creux (7, 32) est amenée de façon à coïncider avec une ouverture de dosage (36) ou une deuxième ouverture de dosage (37) d'une gaine (35) entourant l'arbre creux (7, 32).

6. Dispositif selon la revendication 5,
**caractérisé en ce qu'**un additif (41) est introduit, par la première ouverture de dosage (36), dans le premier domaine d'écoulement (16) et, par la deuxième ouverture de dosage (37), dans le deuxième domaine d'écoulement (17).

7. Dispositif selon la revendication 1,
**caractérisé en ce que**
le disque de commande (28) est une pièce en tôle emboutie comportant un rebord (40) de renforcement.

8. Dispositif selon la revendication 7,
**caractérisé en ce que**
le disque de commande (28) comporte des nervures radiales (29) s'étendant dans la direction radiale.

9. Dispositif selon la revendication 7,
**caractérisé en ce que**
le disque de commande (28) comporte des gorges (30) s'étendant dans la direction radiale.

10. Dispositif selon la revendication 1,
**caractérisé en ce que**
le disque segmenté (20) s'appuie, par l'intermédiaire d'un renforcement (22), sur une première bride (4).

11. Dispositif selon la revendication 10,
**caractérisé en ce que**
le renforcement (22) comprend une tige d'appui (26) sur une pièce de pression (27) au centre du disque segmenté (20).

12. Dispositif selon la revendication 1,
**caractérisé en ce que**
les découpes (51, 52) sont réalisées dans des surfaces (55, 56) du disque segmenté (20) ou du disque de commande (28) en une première géométrie d'ouverture (50) sous forme de fentes radiales s'étendant dans la direction radiale.

13. Dispositif selon la revendication 12,
**caractérisé en ce que**
les premières et les deuxièmes fentes radiales (51, 52) formant les découpes présentent une première largeur (80) et une troisième largeur (83), la première largeur (80) étant supérieure à la troisième (83).

14. Dispositif selon la revendication 13,
**caractérisé en ce que**
les découpes (51, 52) sont agencées dans les surfaces (55, 56) du disque segmenté (20) et du disque de commande (28) en séquence alternée.

15. Dispositif selon la revendication 1.
**caractérisé en ce que**
les découpes (66, 67) sont réalisées dans des surfaces (55, 56) du disque segmenté (20) et du disque de commande (28) en une deuxième géométrie d'ouverture (60) sous forme d'ouvertures en forme de rainures ou de forme trapézoïdale agencées en séquence alternée.

16. Dispositif selon la revendication 15,
**caractérisé en ce que**
les ouvertures en forme de rainures (66) et les ouvertures trapézoïdales (67) sont agencées en anneaux concentriques (61, 62, 63) dans les surfaces (55, 56) des disques.

17. Dispositif selon la revendication 15,
**caractérisé en ce que**
la section transversale de passage des ouvertures en forme de rainures ou des ouvertures trapézoïdales (66, 67) dans les surfaces (55, 56) des disques augmente dans la direction radiale par rapport à l'axe de rotation (44) du disque de commande (28).

18. Dispositif selon la revendication 1,
**caractérisé en ce que**
dans une position de commutation (57, 69) qui amène les découpes (51, 67) des surfaces (55, 56) du disque segmenté (20) et du disque de commande (28) à coïncider dans le deuxième domaine d'écoulement (17), il se forme dans le deuxième domaine d'écoulement (17) une partie de flux (11, 92) qui correspond approximativement à 90 % du flux gazeux non divisé (1) et, dans le premier domaine d'écoulement (16), une partie de flux (10, 93) qui correspond approximativement à 10 % du flux gazeux non divisé (1).

19. Dispositif selon la revendication 1,
**caractérisé en ce que**
dans la position de commutation (58, 68) amenant les découpes (51, 67) des surfaces (55, 56) du disque segmenté (20) et du disque de commande (28) à coïncider à l'intérieur du premier domaine d'écoulement (16), il se forme dans le premier domaine d'écoulement (16) une partie de flux (11, 92) qui correspond approximativement à 90 % du flux gazeux non divisé (1) et, dans le deuxième domaine d'écoulement (17), une partie de flux (10, 93) qui correspond approximativement à 10 % du flux gazeux non divisé (1).

20. Dispositif selon les revendications 18 ou 19,
**caractérisé en ce qu'**
on introduit, par le dispositif de dosage (7, 32, 35) un additif (41) dans celui des domaines d'écoulement (16, 17) qui transporte la partie de flux (10, 93) qui correspond approximativement à 10 % du flux gazeux non divisé (1).

21. Utilisation du dispositif selon une ou plusieurs des revendications précédentes pour introduire un additif (41) dans un catalyseur de gaz d'échappement.
